(19) Europäisches Patentamt
European Patent Office
Office européen des brevets

(11) EP 1 619 473 A1

(12) **EUROPEAN PATENT APPLICATION**
published in accordance with Art. 158(3) EPC

(43) Date of publication:
**25.01.2006 Bulletin 2006/04**

(21) Application number: **04730083.5**

(22) Date of filing: **28.04.2004**

(51) Int Cl.:
*G01C 21/00 (1968.09)*

(86) International application number:
**PCT/JP2004/006210**

(87) International publication number:
**WO 2004/097340 (11.11.2004 Gazette 2004/46)**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **30.04.2003 JP 2003125340**

(71) Applicant: **MATSUSHITA ELECTRIC INDUSTRIAL CO., LTD.**
**Kadoma-shi, Osaka 571-8501 (JP)**

(72) Inventor: **ADACHI, Shinya**
**Yokohama-shi,**
**Kanagawa 227-0038 (JP)**

(74) Representative: **Pautex Schneider, Nicole Véronique et al**
**Novagraaf International SA**
**25, Avenue du Pailly**
**1220 Les Avanchets - Geneva (CH)**

# (54) ROUTE INFORMATION TRANSMITTING METHOD AND DEVICE

(57) An object of the invention is to provide a route information transmitting method for transmitting a recommended route or a guided route to a receiving side accurately in as small a volume of data as possible. In the route information transmitting method of the invention, a transmitting side provides the receiving side which requests information on a route with compressed data obtained by performing an arithmetic treatment on position data of a plurality of points aligned along a route so as to convert the position data into statistically biased data and variable length coding the data so converted. The receiving side decodes the compressed data so as to restore the position data to thereby identify the route through a map matching. Due to this, the route information can be transmitted accurately in a small volume of data.

FIG. 1

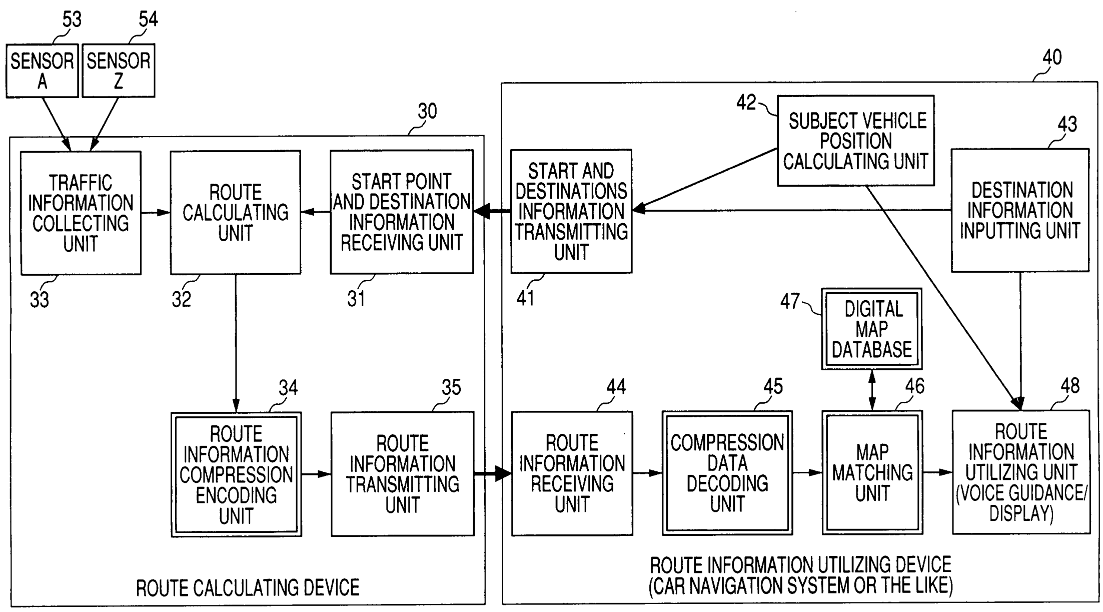


EP 1 619 473 A1

## Description

<Technical Field>

The present invention relates to a route information transmission method for transmitting a route to a destination or the like to a receiver side and a system for performing the method, and more particularly to method and system for transmitting route information accurately with as small a data volume as possible.

<Background Art>

Conventionally, there have been known vehicular navigation systems including a GPS receiver and a digital map in which when a destination is set, a recommended traveling route from a current point to the destination is calculated and is then displayed. Furthermore, there have been known systems in which a current point and a destination are transmitted from an in-vehicle car navigation system to an information center, a recommended route is calculated by adding traffic conditions at the information center, and the route so calculated is then provided for the in-vehicle car navigation system.

In addition, on one hand, in most of the conventional vehicular navigation systems, in order to perform an efficient and easy-to-understand route guidance while avoiding narrow roads and complicatedly routed roads, roads for use for route guidance are limited to, for example, roads equal to or wider than prefectural roads (prefectural roads, national roads, toll roads and the like) and roads of 5.5m or wider. Due to this, in the event that a final destination is off a road for use for route guidance, while a recommended traveling road to a peripheral point to the final destination is calculated and displayed, there may occur a case where a route from the peripheral point to the final destination is not displayed.

With a view to improving such a drawback, a patent document No. 1 (JP-A-9-178499) discloses a system in which a vehicular navigation system sends information regarding a current point and a final destination to an information center, so that the vehicular navigation system obtains route information from a peripheral point to the final destination to the destination. In this system, the information center estimates, based on the information so received, a peripheral point to the destination which the vehicular navigation system can search, calculates a route reaching from the peripheral point to the final destination to the destination and transmits route information so calculated to the vehicular navigation system. The vehicular navigation system displays the route from the current point to the peripheral point to the destination that it searched and the route from the peripheral point to the final destination to the destination that it received from the information center.

Incidentally, in a case where the information center calculates a recommended route and provides an in-vehicle navigation center with the recommended route so calculated, a route on a map and points along the routes need to be transmitted. However, as inevitable in the case of scale maps, digital map databases contain errors attributed to different map manufacturers. In order to absorb such errors in the digital map databases, in conventional traffic information providing systems such as a VICS system, in order that even in the event that errors exist among the respective maps, a road can be recognized as the same road, node numbers (VICS node numbers) are defined for nodes such as intersections and link numbers (VICS link numbers) are defined for roads between nodes, so that object points for traffic information are represented by the link numbers and node numbers so defined. Information on the node numbers and link numbers is retained in the respective map databases, a vehicular navigation system which complies with VICS can identify an object route or position for traffic information based on the link numbers and node numbers contained in the VICS information, irrespective of the type of the map database installed therein.

When also transmitting a route to a destination, by using these link numbers, the route can be transmitted in the form of route information in which link numbers for links from an starting point to an ending point.

However, node numbers and link numbers defined for the road network need to be renumbered with new numbers, when new roads are built or the existing roads are rerouted, and node numbers and link numbers assigned to the digital map data produced by the respective map manufacturers also need to be renumbered in association with the renumbering. Since building of new roads and rerouting the existing roads continue for ever, as long as the identifying method using node numbers and link numbers continues to be taken, the digital map databases need to be maintained for ever spending lots of man-hours and money, and if any negligence of the maintenance, no accurate road information can be transmitted.

In order to improve these points, a patent document No. 2 (JP-A-2001-66146) proposes a digital map positional information transmitting method in which a transmission side which transmits road segments transmits latitude-longitude information in which latitudes and longitudes at a plurality of points along a road segment are arranged sequentially, and a reception side which has received the information performs a map matching to identify the road segment on its map.

However, in the method for transmitting a route by transmitting latitude-longitude information on a plurality of points along the route, while many points have to be set along the route so that the reception side can reproduce the true shape of the route in order to prevent an erroneous matching on the reception side, when the number of points along the route is increased, the data volume of data to be transmitted is increased, leading to problems that costs for transmitting route information are accumulated and, in addition, that processing loads on the transmission side and the reception side are increased.

<Disclosure of the Invention>

The invention was made to solve the conventional problems and an object thereof is to provide a route information transmission method for transmitting a recommended route or a guided route to a reception side accurately and with as small a data volume as possible and a system for performing the method.

Then, according to the invention, there is provided a route information transmitting method which is characterized in that a transmitting side provides a receiving side which requests route information with compressed data obtained by arithmetically processing positional data of a plurality of points aligned along a route so as to convert the positional data into statistically biased data and variable length coding the statistically biased data so converted, and in that the receiving side identifies the route by decoding the compressed data so as to restore the positional data.

Due to this, the route information can be transmitted accurately with a small volume of data.

In addition, according to the invention, there is provided a route information providing apparatus which is characterized by comprising a transmitting means for transmitting a request for the provision of route information, a receiving means for receiving compressed data provided and a means for decoding the compressed data so as to restore positional data of a plurality of point aligned along a route.

Due to this, the route information receiving apparatus can identify the route accurately from the information of a small volume of data.

<Brief Description of the Drawings>

Fig. 1 is a block diagram illustrating the configuration of a recommended route providing system according to a first embodiment of the invention;

Fig. 2 is an exemplary drawing illustrating the recommended route providing system according to the first embodiment of the invention;

Fig. 3 is a data configuration drawing of recommended route information transmitted by the recommended route providing system according to the first embodiment of the invention;

Fig. 4 shows drawings explaining a variable length coding by a route information transmission method according to the first embodiment of the invention;

Fig. 5 is a drawing showing a code table used in the route information transmission method according to the first embodiment of the invention;

Fig. 6 is a block diagram illustrating the configuration of a running route providing system according to a second embodiment;

Fig. 7 is an exemplary drawing illustrating the running route providing system according to the second embodiment of the invention; and

Fig. 8 is a data constitution drawing illustrating running route information transmitted by the running route providing system according to the second embodiment of the invention.

In addition, reference numerals in the drawings denote respectively as below:

10: running route storing and transmitting device; 11: information request range information receiving unit; 12: running route information extracting unit; 13: running route information storage unit; 14: running route manual inputting unit; 15: running route compression encoding unit; 16: running route information transmitting unit; 20: running route information utilizing device; 21: information request range transmitting unit; 22: information request range calculating unit; 23: running route information receiving unit; 24: compressed data decoding unit; 25: digital map database; 26: map matching unit; 27: running route information utilizing unit; 30: route calculating device; 31: start point and destination information receiving unit; 32: route calculating unit; 33: traffic information collecting unit; 34: route information compression encoding unit; 35: route information transmitting unit; 40: route information utilizing device; 41: start point and destination information receiving unit; 42: subject vehicle position calculating unit; 43: destination information inputting unit; 44: route information receiving unit; 45: compressed data decoding unit; 46: map matching unit; 47: digital map database; 48: route information utilizing unit; 51: probe car; 52: probe car; 53: sensor; and 54 sensor.

<Best Mode for Carrying out the Invention>

Embodiments of the invention will be described below by reference to the drawings.

(First Embodiment)

In a first embodiment of the invention, a case will be described in which information on a recommended route to a destination is transmitted.

In a route information transmitting method according to the first embodiment of the invention, sampling points are reset at intervals of a constant distance along a recommended route (this being referred to as *equidistant re-sampling*), a compression encoding treatment is applied to a data string in which position data of the respective sampling points are aligned sequentially and compression encoded data are transmitted. A receiving side which receives them restores the data string of the position data of the sampling points to thereby identify the recommended route.

Furthermore, in order to identify the route information so received more accurately, an object road is identified on its own digital map data by performing a matching with its own digital map data. In addition, when also performing a route guidance (voice guidance and enlarged display of intersections and interchanges, deformed display) , as has been described, an object road needs to be identified on a digital map database held in its own device by performing a matching.

In the event that there exists no road corresponding to the received route information on its own digital map database, assuming that the object road is a newly opened road, a route guidance is performed.

The compression encoding of the data string of position data is performed in the following order; ① Conversion of the position data into a single variable, ② Conversion of a value represented by the single variable into a statistically biased value, and ③ Variable length coding of the converted value.

(1) Conversion of Position Data into Single Variable

Fig. 4A shows sampling points set along the recommended route in the equidistant re-sampling as PJ-1, PJ. The sampling point (PJ) can uniquely be identified in two dimensions of a distance L from the adjacent sampling point (PJ-1) and an angular component Θ, and assuming that the distance is constant (L), the sampling point (PJ) can be represented by one variable of only the angular component Θ from the adjacent sampling point (PJ-1). In Fig. 4A, as this angle Θ, an angle Θ is shown which is represented by an *absolute orientation* which designates the magnitude in a range of 0 to 360 degrees measured clockwise from the orientation of true north (top on the map) which is regarded as 0 degree. Assuming that the x-y coordinates (latitude, longitude) of PJ-1 and PJ are (xj-1, yj-1) and (xj, yj), respectively, this angle Θj-1 can be calculated from the following equation:

$$\Theta j\text{-}1 = \tan\text{-}1 \{(xj - xj\text{-}1)/(yj - yj\text{-}1)\}$$

Consequently, the recommended route can be represented by a data string of angular components of the respective sampling points by designating the constant distance L between the sampling points and latitude and longitude of the sampling point (reference point) which constitutes a starting point or an ending point separately.

(2) Conversion of Single Variable Value into Statistically Biased Value

In order for a single variable value of each sampling point to become a statistically biased value which is suitable for variable length coding, as shown in Fig. 4B, the angular component of each sampling point is represented by a displacement difference from the angular component of the adjacent sampling point, that is, a deviation *angle* Θj. This deviation angle Θj is calculated as:

$$\Theta j = \Theta j - \Theta j\text{-}1$$

In the event that the road is rectilinear, the deviation angle of each sampling point focuses on the vicinity of 0 and becomes statistically biased data.

In addition, as shown in Fig. 4C, the angular component of the sampling point can be converted into statistically biased data by representing the deviation angle θj of the sampling point PJ, to which attention is to be paid, by a difference value (deviation-angle estimated difference value) Δθj from a deviation angle estimated value Sj (statistically estimated value) of the sampling point PJ which is estimated using deviation angles θj-1, θj-2, ... of the previous sampling points PJ-1, PJ-2, .... The statistically estimated value Sj can be defined as, for example:

$$Sj = \theta j-1;$$

or

$$Sj = (\theta j-1 + \theta j-2) / 2$$

In addition, Sj may be defined in terms of a weighted average of deviation angles at the n previous sampling points. The deviation-angle estimated difference value Δθj is calculated as:

$$\Delta\theta j = \theta j - Sj$$

In the event that the road curves at a constant curvature, a deviation-angle estimated difference value Δθ of each sampling point focuses on the vicinity of 0 and becomes statistically biased data.

Fig. 4D is a graph illustrating frequency at which data are generated when the rectilinear recommended route is represented by the deviation angle θ and when the curved recommended route is represented by the deviation-angle estimated difference value Δθ. The generation frequency of θ and Δθ becomes maximum when θ = 0° and is statistically biased.

(3) Variable Length Coding

Next, the value of the data string which is converted into the statistically biased value is variable length coded. While the variable length coding method includes many types of methods such as fixed numerical value compression method (0 compression or the like), Shannon-Fanno coding method, Huffman coding method, arithmetic coding method and lexicographic coding method, here a case will be described in which Huffman coding method, which is the commonest, is used.

In this variable length coding, more frequently generated data are coded by bits in a smaller number and less frequently generated data are coded by bits in a greater number, so that the total data volume is reduced. A relationship between the data and codes are defined in a code table.

Now, assume that the arrangement of Δθs at sampling points along the recommended route which are represented in a unit of 1° is as follows:

"0_0_-2_0_0_+1_0_0_-1_0_+5_0_0_0_+1_0"

A case will be described where a code table shown in Fig. 5 in which variable length coding and run length coding are combined is used in order to code the data string. The code table regulates such that Δθ which is in the range of -1° to +1° is regarded as 0° and is then represented by a code 0, in a case where 0° occurs continuously five times, it is represented by a code *100*, and in a case where 0° occurs continuously ten times, it is represented by a code *1101*. In addition, Δθ which is in the range of +/-2° to 4° is regarded as +/-3° and when it is positive, Δθ is then represented by adding an additional bit 0 to a code 1110, whereas when it is negative, Δθ is then represented by adding an additional bit *1* to the code 1110, Δθ which is in the range of +/-5° to 7° is regarded as +/-6° and is then represented by adding an additional bit denoting positive or negative to a code *111100*, and Δθ which is in the range of +/-8° to 10° is regarded as +/-9° and is then represented by adding an additional bit denoting positive or negative to a code *111101*.

Due to this, the data string is coded as follows:

"0_0_11101_100_0_0_1111000_100"

→ "0011101100001111000100"

The receiving side which has received the data restores the data string of Δθs using the same code table as that used in coding and reproduces the position data of the sampling points by performing an opposite process to that implemented on a transmitting side.

Fig. 2 exemplarily illustrates a system for providing recommended route information using this route information transmitting method, and additionally, Fig. 1 illustrates the configuration of the system in a block diagram.

A route calculating device 30 for providing route information includes a start point and destination information receiving unit 31 for receiving information on start point and a destination from a route information utilizing device 40 such as a vehicular navigation system, a traffic information collecting unit 33 for collecting information from ultrasonic vehicle sensors and image sensors which are placed along each road or various types of sensors 53, 54 such as probe cars functioning as running traffic information collecting sensors and also collecting information on an unexpected event such as an accident which is entered manually, a route calculating unit 32 for calculating a recommended route from the start point to the destination and a required time (a traveling time) to cover the route while referring to the traffic information collected by the traffic information collecting unit 33, a route information compression encoding unit 34 for compression encoding the information on the recommended route, and a route information transmitting unit 35 for transmitting data of the compression encoded recommended route and traveling time information to the route information utilizing device 40.

Then, the route information utilizing device 40 includes a subject vehicle position calculating unit 42 for detecting the position of the subject vehicle using a GPS function or the like, a destination information inputting unit 43 for inputting a destination, a start and destinations information transmitting unit 41 for transmitting information on the current point and the destination to the route calculating device 30, a route information receiving unit 44 for receiving recommended route information from the route calculating device 30, a compressed data decoding unit 45 for decoding the compression encoded data, a digital map database 47, a map matching unit 46 for performing a map matching of the position data of the decoded recommended route with digital map data to thereby identify the recommended route on a digital map and a route information utilizing unit 48 for displaying the recommended route.

In this system, when the user enters a traveling destination from the destination information inputting unit 43 of the route information utilizing device 40, requesting the provision of route information to the destination, the route information utilizing device 40 transmits the current point detected by the subject vehicle position calculating unit 42 and the destination inputted from the destination information inputting unit 43 to the route calculating device 30.

Then, in the route calculating device 30, vehicle detection information taken by the ultrasonic vehicle sensors and image sensors which are placed along each road is collected to the traffic information collecting unit, and, in addition, information on the speed measured by the running probe car is sent to the traffic information collecting unit 33 via cellular phones and beacons. In addition, information on traffic accidents or road constructions which are entered manually is also collected to the traffic information collecting unit 33.

When receiving the information on the current point and the destination which was sent from the route information utilizing device 40, the route calculating unit 32 of the route calculating device 30 refers to the traffic information collected by the traffic information collecting unit 33 and then calculates several recommended routes and traveling times which allow the user to reach from the current point to the destination in a short period of time. The route information compress encoding unit 34 performs an equidistant re-sampling as to the recommended route calculated by the route calculating unit 32 so as to variable length code a data string of the position data of the sampling points using the aforesaid method. Information on the compression encoded data string regarding the recommended route and the traveling time is sent from the route information transmitting unit 35 to the route information utilizing device 40.

Fig. 3 illustrates the data configuration of the recommended route information sent from the route calculating device 30. Here, in coding, either deviation angles or deviation-angle estimated difference values are used as *coding parameters,* or, information on the constant distance L set in the equidistance re-sampling, identification numbers in the code table and latitude and longitude of the reference point (start point, destination) is described, the number of recommended routes that are provided is described as the *number of routes provided,* and furthermore, the route shape is described which is represented by the traveling time of each recommended route and the data string of variable length coded data.

In the route information utilizing device 40, which has received the recommended route information, the compressed data decoding unit 45 decodes the data string of coded route shape data and restores the position data of the sampling points aligned along the recommended route. As this occurs, the compressed data decoding unit 45 performs the decoding of the route shape data using a code table of an identification number designated by the coding parameters among a plurality of code tables given in advance from the route calculating device 30 and held.

The map matching unit 46 obtains points along the road which correspond to the sampling points on the recommended route in a known map matching method using map data of the digital map database 47 and identifies the recommended route on the digital map.

The route information utilizing unit 48 displays the recommended route on a screen and guides a traveling direction of the vehicle along the recommended route via voice or enlarged views of intersections and interchanges.

Thus, in this system, since the shape data of the recommended route are coded and transmitted, the volume of data transmitted becomes small. In addition, the receiving side can identify the recommended route accurately through map matching.

In the route information transmitting method described in the patent document No. 1, while the information sent to the vehicular navigation system from the information center (the route calculating device) with the route from the current point to the final destination being calculated thereby is limited only to the route information from the peripheral point to the final destination to the destination, in the route information sending method according to the first embodiment of the invention, since the volume of data that are transmitted is small, the route information from the current point to the final destination can be transmitted without causing the transmitting side and the receiving side to bear a great load.

Note that while in this embodiment, the case has been described in which the recommended route is re-sampled equidistantly, and the angular components of the position data at the sampling points are converted into the statistically biased value for the variable length coding, it is possible to perform the variable length coding by setting a sampling point along the recommended route in such a manner that the deviation angle becomes constant and converting the distance Lj to the adjacent sampling point into a statistically biased value (for example, a distance estimated difference value $\Delta Lj$ is obtained from $\Delta Lj = Lj - Sj$ by defining $Sj = Lj - 1$). In addition, it may be possible to perform the variable length coding by setting nodes and interpolating points (points set on the map to represent the shape of the route) along the recommended route as sampling points and converting both angular component $\theta j$ and distance component Lj, which are made to function as variables, into statistically biased values.

(Second Embodiment)

In a second embodiment of the invention, a system for providing information indicating the traveling path of other vehicles will be described.

For example, a running storing and transmitting device 10 includes an information request range information receiving unit 11 for receiving information designating an area from a running route information utilizing device 20 such as a vehicular navigation system and a personal computer, a running route manual inputting unit 14 for manually inputting a running route, a running route information storing unit 13 for storing running routes sent from respective probe cars 51, 52 or running routes inputted from the running route inputting unit 14, a running route information extracting unit 12 for extracting a running route within an information request range (area or date and time band) designated by the running route information utilizing device 20 among the running routes stored in the running route information storing unit 13, a running route compression encoding unit 15 for compression encoding the running route so extracted and a running route information transmitting unit 16 for transmitting the compression encoded running route to the running route information utilizing device 20.

In addition, the running route information utilizing device 20 includes an information request range calculating unit 22 for setting an information request range, an information request range transmitting unit 21 for transmitting the information request range so set to the running route storing and transmitting device 10, a running route information receiving unit 23 for receiving running route information from the running route storing and transmitting device 10, a compressed data decoding unit 24 for decoding data of a compression encoded running route, a database of digital maps, a map matching unit 26 for performing a map matching of position data of the running route so decoded with the digital map data to thereby identify the running route on the digital map, and a running route information utilizing unit 27 for displaying the running route.

In this system, the running route information utilizing device 20 such as a vehicular navigation system and a personal computer determines an information request range, that is, the type of a day (week days, holidays and the like) and a time band (the peak hours of traffic on the morning roads, the peak hours of traffic on the evening roads, slack hours on night roads) and transmits the information request range so determined to the running route storing and transmitting device 10.

Then, in the running route storing and transmitting device 10, traveling path of the probe cars 51, 52 are transmitted thereto via cellular phones and beacons or stored on a storage medium such as a flexible disk for input thereinto, whereby the traveling path so transmitted or inputted are stored in the running route information storing unit 13. In addition, a running route inputted from the running route manual inputting unit 14 is also stored in the running route information storing unit 13.

The running route extracting unit 12 extracts a running route falling within the information request range from running routes stored in the running route information storing unit 13. As in the case with the first embodiment, the running route compression encoding unit 15 performs an equidistance re-sampling on the running route so extracted so as to variable length code a data string of position data of the sampling point by the aforesaid method. The running route information so compressed is transmitted from the running route information transmitting unit 16 to the running route information utilizing device 20 which requested the provision of the information.

Fig. 8 illustrates the constitution of data of route information sent from the route calculating device 30. Here, together with *encoding parameters* and *the number of locus* data to *be provided,* the profile (the time of the day of the month in the year when the running was carried out, traveling time and the like) of each traveling path and the shape of the running route represented by the data string of variable length encoded data are described.

In the running route information utilizing device 20, the compressed data decoding unit 24 decodes the encoded data string of running route shapes so as to restore the position data of the sampling points aligned along the running route. As this occurs, the compressed data decoding unit 24 decodes the data of the shape of the running route using a code table of identification numbers which is designated by the coding parameters from a plurality of code tables given in advance by the running route storing and transmitting device 10 and held therein.

The map matching unit 26 obtains positions along the road which correspond to the sampling points along the running route by a known map matching method, using the map data of the digital map database so as to identify the running route on the digital map.

The running route information utilizing unit 27 displays the running route on the screen.

Thus, in this system, by compression encoding the information of traveling path requested by the receiving side, the running route information can be transmitted in a small volume of transmission data. In particular, in a case where a taxi driven by a professional driver or a vehicle driven by a person who lives in the vicinity of a target place is designated as a probe car, so that traveling path of the taxi of vehicle are stored, running route information can be provided which is far more valuable as route information than running route information that would be obtained through driving of a vehicle by a driver who is not familiar with the target place.

Thus, while the invention has been described in detail or by reference to the specific embodiments, it is clear to those skilled in the art that various changes and/or modifications can be made thereto without departing from the sprit and scope of the invention.

The patent application of this invention is such as to be based on the Japanese Patent Application (No. 20030125340) and the contents thereof are incorporated herein by reference.

<Industrial Applicability>

As is clear from the description that has been made heretofore, the route information transmitting method according to the invention can transmit the route information accurately in a small volume of data.

In addition, the device according to the invention can transmit or receive information effective in supporting the driving of a vehicle such as a route to a destination and traveling path of the past driving by the route information transmitting method.

## Claims

**1.** A route information transmitting method being **characterized in that**:

a transmitting side provides a receiving side which requests route information with compressed data obtained by arithmetically processing position data of a plurality of points aligned along a route so as to convert the position data into statistically biased data and variable length coding the statistically biased data so converted, and **in that**;
the receiving side identifies the route by decoding the compressed data so as to restore the position data.

**2.** A route information transmitting method according to Claim 1, **characterized in that**:

the receiving side indicates the transmitting side a current point and a destination so as to request route information to the destination; and **in that**
the transmitting side calculates a route to the destination and provides the receiving side with the compressed data regarding the route.

**3.** A route information transmitting method according to Claim 1, **characterized in that**:

the receiving side requests information on traveling path by designating a range; and **in that** the transmitting side extracts a traveling path which falls within the range from past traveling path information stored therein and provides the receiving side with the compressed data regarding the traveling path.

**4.** A route information transmitting method according to Claim 1, **characterized in that**:

the transmitting side obtains the compressed data by performing an equidistance re-sampling on the route, representing position data of an obtained sampling point by a deviation angle and variable length coding the deviation angle.

**5.** A route information transmitting method according to Claim 1, **characterized in that**:

the transmitting side obtains the compressed data by performing an equidistance re-sampling on the route, representing position data of an obtained sampling point by a deviation-angle estimated difference value and variable length coding the deviation-angle estimated difference value.

**6.** A route information transmitting method according to any of Claims 1 to 5, **characterized in that**:

the receiving side performs a matching with digital map data held in a device thereof using the restored position data so as to identify an object road on the digital map data held in the device thereof.

**7.** A route information providing apparatus being **characterized by** comprising:

receiving means for receiving a request for information on a route;
encoding means for producing compressed data by performing an arithmetic treatment on position data of a plurality of points aligned along the route so as to convert the position data into statistically biased data and variable length coding the data; and
transmitting means for providing the compressed data.

**8.** A route information providing apparatus according to Claim 7, **characterized by** comprising further:

route calculating means for calculating a route to a destination based on information on a current point and the destination which is received by the receiving means; and **characterized in that**;
the encoding means produces the compressed data regarding the route calculated by the route calculating means.

**9.** A route information providing apparatus according to Claim 7, **characterized by** comprising further:

storing means for receiving and storing information on traveling path; and
running route information extracting means for extracting a traveling path which falls within a designated range received by the receiving means from traveling path stored in the storing means; and **characterized in that**;
the encoding means produces the compressed data regarding the traveling path extracted by the running route extracting means.

**10.** A route information receiving apparatus being **characterized by** comprising:

transmitting means for requesting information on a route;
receiving means for receiving compressed data provided; and
compressed data decoding means for restoring position data of a plurality of points aligned along the route by decoding the compressed data.

**11.** A route information receiving apparatus according to Claim 10, **characterized in that**:

information on a current point and a destination is transmitted from the transmitting means, a matching with a digital map is performed using the position data restored from the compressed data provided, and the route is identified on the digital map, so that a route from the current point to the destination is identified.

**12.** A route information receiving apparatus according to Claim 10, **characterized in that**:

information designating a range is transmitted from the transmitting means, a matching with a digital map is performed using the position data restored from the compressed data provided, and the route is identified on the digital map, so that a traveling path falling within the range is identified.

**13.** A route information receiving apparatus according to Claim 10, **characterized by** comprising further:

map matching means for performing a matching with a digital map using the position data restored by the compressed data decoding means so as to identify the route on the digital map.

**14.** A route information receiving apparatus according to Claim 13, **characterized in that**:

the transmitting means transmits information on a current point and a destination; and **in that**
the map matching means further identifies a route from the current point to the destination.

**15.** A route information receiving apparatus according to Claim 13, **characterized in that**:

the transmitting means transmits information designating a range; and **in that**
the map matching means further identifies a traveling path falling within the range.

FIG. 1

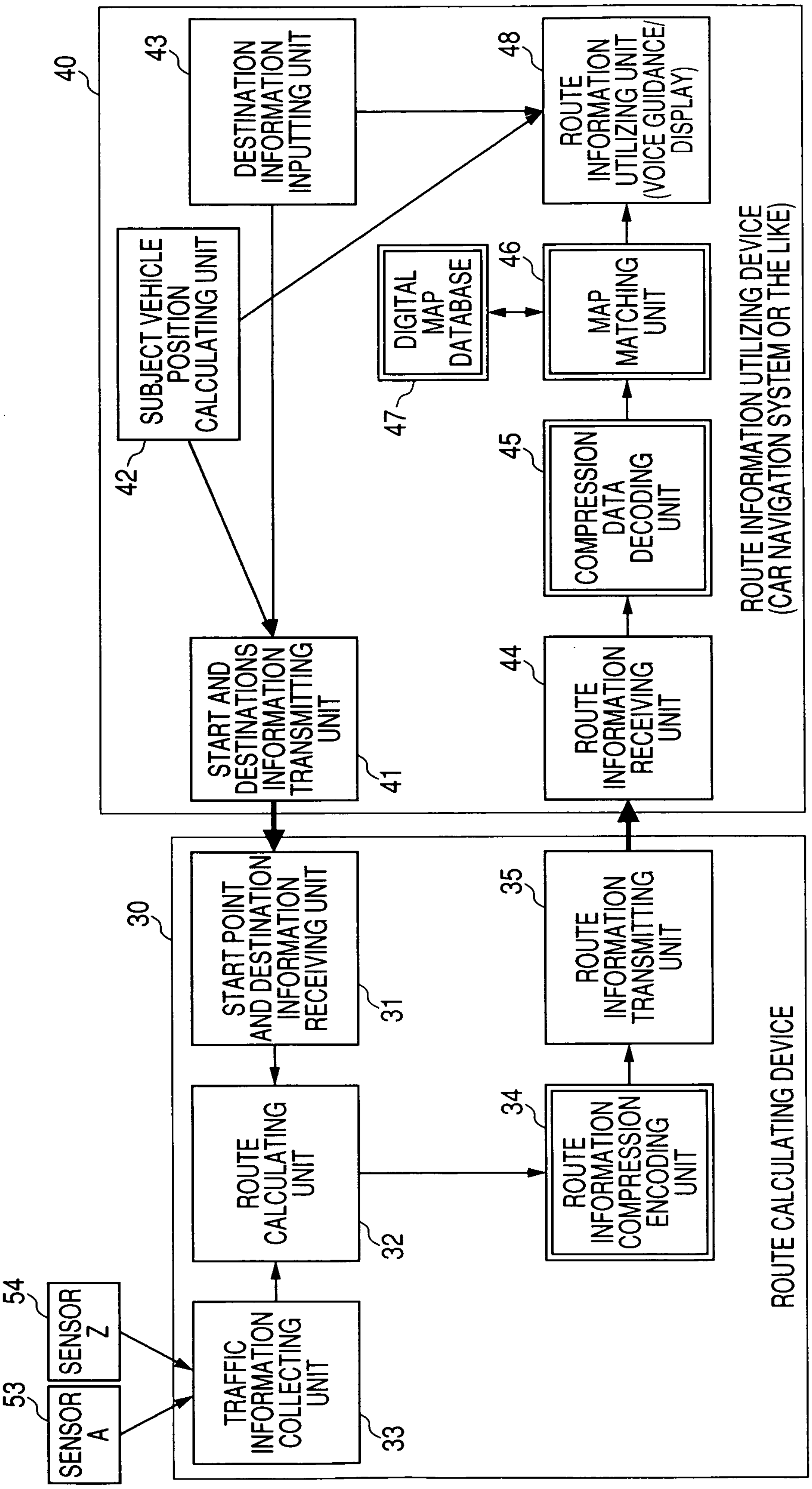
40
43
DESTINATION INFORMATION INPUTTING UNIT
48
ROUTE INFORMATION UTILIZING UNIT (VOICE GUIDANCE/ DISPLAY)
SUBJECT VEHICLE POSITION CALCULATING UNIT
42
DIGITAL MAP DATABASE
47
46
MAP MATCHING UNIT
45
COMPRESSION DATA DECODING UNIT
START AND DESTINATIONS INFORMATION TRANSMITTING UNIT
41
44
ROUTE INFORMATION RECEIVING UNIT
ROUTE INFORMATION UTILIZING DEVICE (CAR NAVIGATION SYSTEM OR THE LIKE)
30
START POINT AND DESTINATION INFORMATION RECEIVING UNIT
31
35
ROUTE INFORMATION TRANSMITTING UNIT
ROUTE CALCULATING UNIT
32
34
ROUTE INFORMATION COMPRESSION ENCODING UNIT
ROUTE CALCULATING DEVICE
54
SENSOR Z
53
SENSOR A
TRAFFIC INFORMATION COLLECTING UNIT
33

FIG. 2

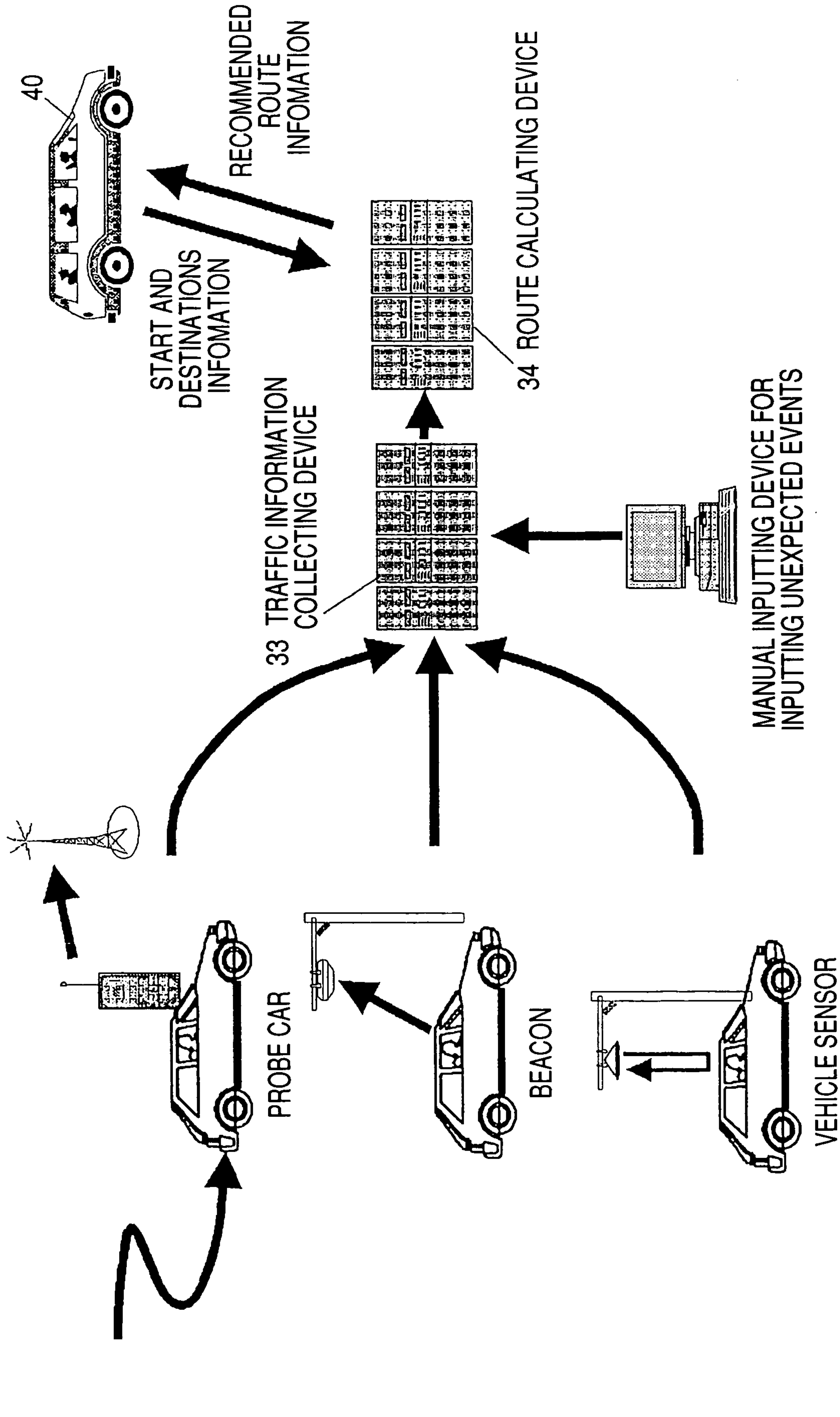
40
RECOMMENDED ROUTE INFOMATION
START AND DESTINATIONS INFOMATION
34 ROUTE CALCULATING DEVICE
33 TRAFFIC INFORMATION COLLECTING DEVICE
MANUAL INPUTTING DEVICE FOR INPUTTING UNEXPECTED EVENTS
PROBE CAR
BEACON
VEHICLE SENSOR

*FIG. 3*

| |
|---|
| HEADER INFORMATION |
| ENCODING PARAMETERS |
| THE NUMBER OF ROUTES TO BE PROVIDED |
| TRAVELING TIME FOR ROUTE 1 |
| SHAPE DATA OF ROUTE 1 (VARIABLE LENGTH CODED SHAPE INFORMATION ON DEVIATION ANGLE AND DEVIATION ANGLE EXPECTED DIFFERENCE) |
| TRAVELING TIME FOR ROUTE 2 |
| SHAPE DATA OF ROUTE 2 (VARIABLE LENGTH CODED SHAPE INFORMATION ON DEVIATION ANGLE AND DEVIATION ANGLE EXPECTED DIFFERENCE) |
| ~ |

FIG. 4(a)

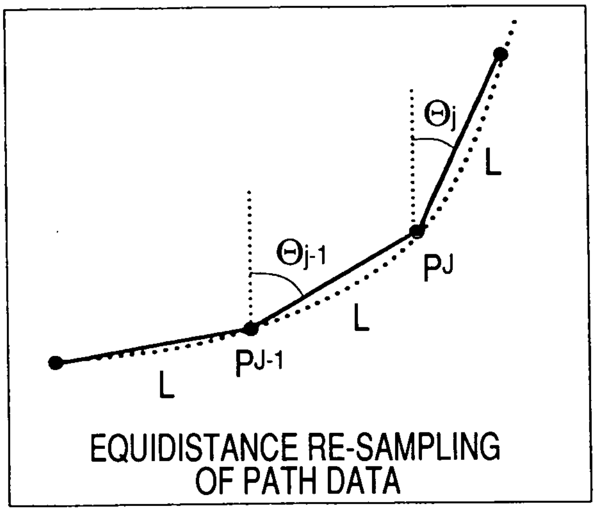


FIG. 4(b)

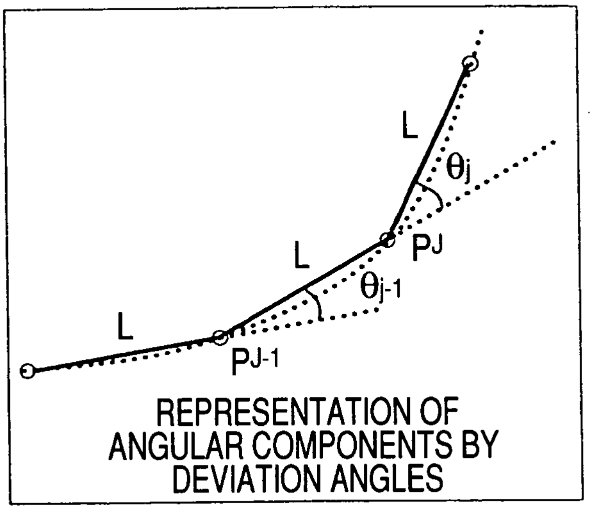


FIG. 4(c)

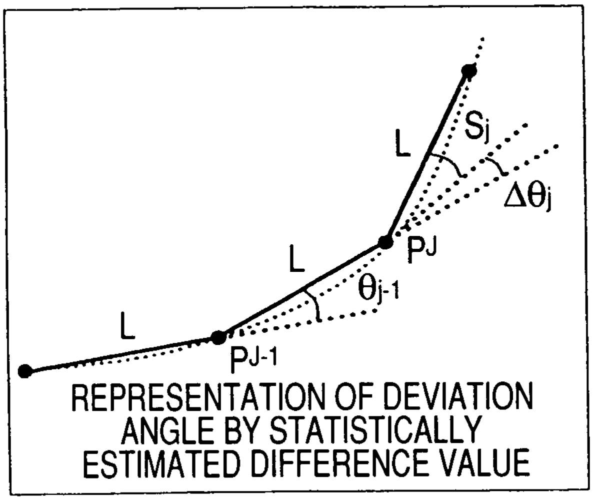


FIG. 4(d)

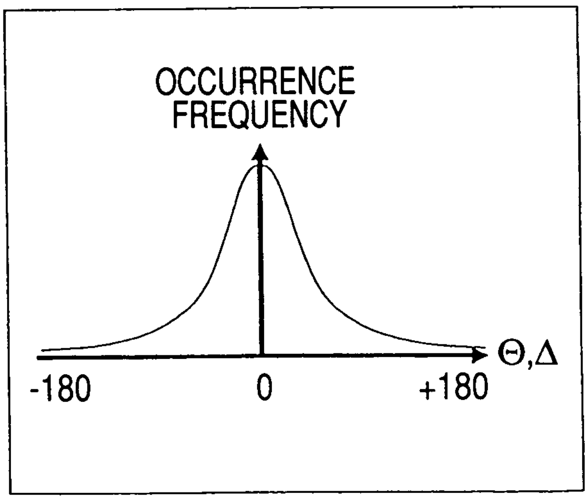

# FIG. 5

| SPECIAL CODES | | CODES | ADDITIONAL BITS | |
|---|---|---|---|---|
| EOD CODES | | 1100 | 0 | |
| INPUT VALUES | | CODES | ADDITIONAL BITS | RANGE OF Δθ(°) |
| RUN LENGTH | VALUE OF Δθ(°) | | | |
| 0 | 0 | 0 | 0 | -1 ~ +1 |
| 5 | 0 | 100 | 0 | 〃 |
| 10 | 0 | 1101 | 0 | 〃 |
| 0 | ±3 | 1110 | 1 (± IDENTIFICATION) | ±2 ~ 4 |
| 0 | ±6 | 111100 | 1 (± IDENTIFICATION) | ±5 ~ 7 |
| 0 | ±9 | 111101 | 1 (± IDENTIFICATION) | ±8 ~ 10 |
| ⟆ | | | | |

FIG. 6

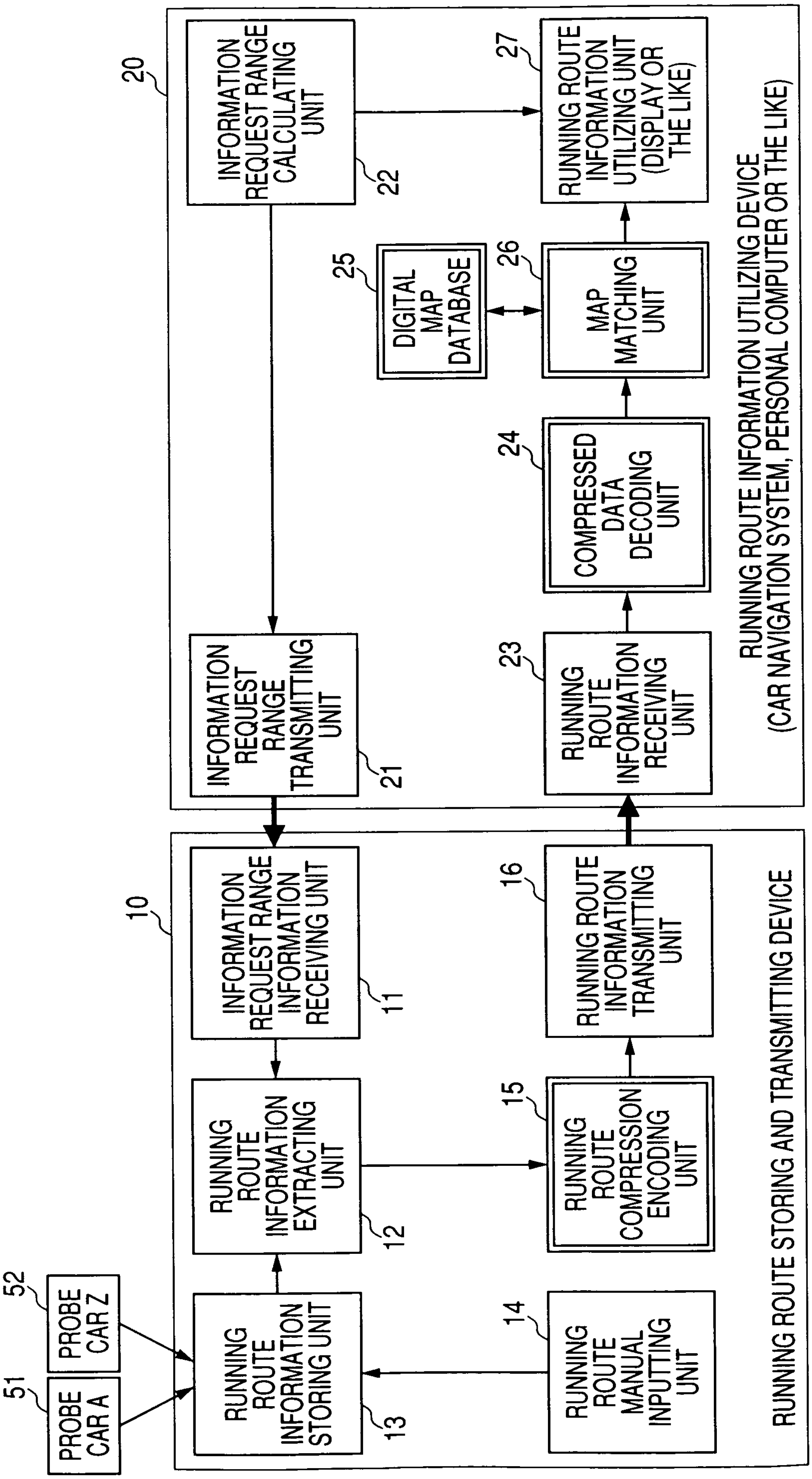
20
INFORMATION REQUEST RANGE CALCULATING UNIT
22
27
RUNNING ROUTE INFORMATION UTILIZING UNIT (DISPLAY OR THE LIKE)
25
DIGITAL MAP DATABASE
26
MAP MATCHING UNIT
24
COMPRESSED DATA DECODING UNIT
23
RUNNING ROUTE INFORMATION RECEIVING UNIT
21
INFORMATION REQUEST RANGE TRANSMITTING UNIT
RUNNING ROUTE INFORMATION UTILIZING DEVICE (CAR NAVIGATION SYSTEM, PERSONAL COMPUTER OR THE LIKE)
10
INFORMATION REQUEST RANGE INFORMATION RECEIVING UNIT
11
16
RUNNING ROUTE INFORMATION TRANSMITTING UNIT
15
RUNNING ROUTE COMPRESSION ENCODING UNIT
RUNNING ROUTE INFORMATION EXTRACTING UNIT
12
14
RUNNING ROUTE MANUAL INPUTTING UNIT
RUNNING ROUTE INFORMATION STORING UNIT
13
51
PROBE CAR A
52
PROBE CAR Z
RUNNING ROUTE STORING AND TRANSMITTING DEVICE

FIG. 7

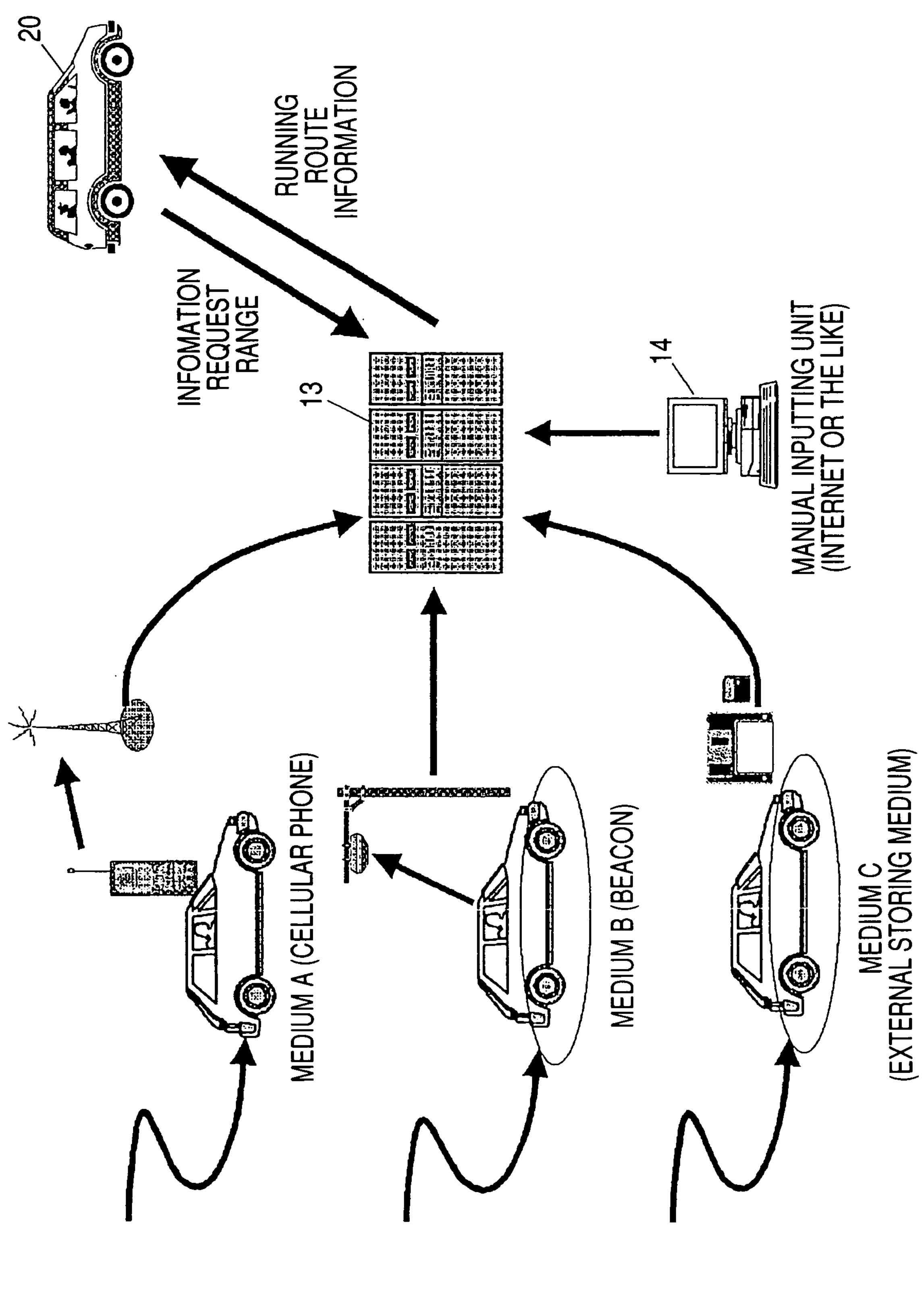
20
RUNNING ROUTE INFORMATION
INFOMATION REQUEST RANGE
13
14
MANUAL INPUTTING UNIT (INTERNET OR THE LIKE)
MEDIUM A (CELLULAR PHONE)
MEDIUM B (BEACON)
MEDIUM C (EXTERNAL STORING MEDIUM)

FIG. 8

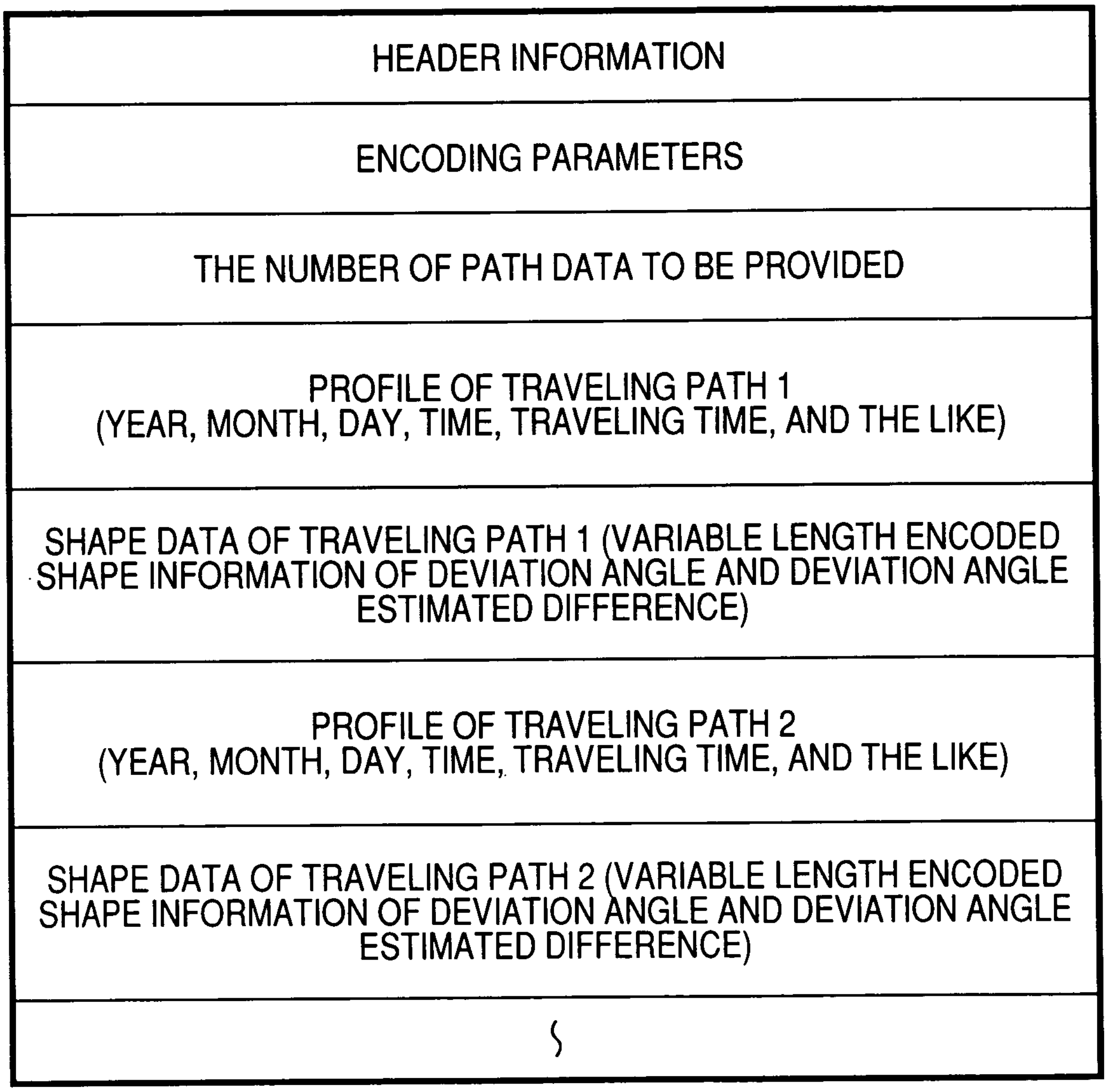
HEADER INFORMATION
ENCODING PARAMETERS
THE NUMBER OF PATH DATA TO BE PROVIDED
PROFILE OF TRAVELING PATH 1 (YEAR, MONTH, DAY, TIME, TRAVELING TIME, AND THE LIKE)
SHAPE DATA OF TRAVELING PATH 1 (VARIABLE LENGTH ENCODED SHAPE INFORMATION OF DEVIATION ANGLE AND DEVIATION ANGLE ESTIMATED DIFFERENCE)
PROFILE OF TRAVELING PATH 2 (YEAR, MONTH, DAY, TIME, TRAVELING TIME, AND THE LIKE)
SHAPE DATA OF TRAVELING PATH 2 (VARIABLE LENGTH ENCODED SHAPE INFORMATION OF DEVIATION ANGLE AND DEVIATION ANGLE ESTIMATED DIFFERENCE)

**INTERNATIONAL SEARCH REPORT**

International application No.
PCT/JP2004/006210

A. CLASSIFICATION OF SUBJECT MATTER
Int.Cl$^7$ G01C21/00

According to International Patent Classification (IPC) or to both national classification and IPC

B. FIELDS SEARCHED

Minimum documentation searched (classification system followed by classification symbols)
Int.Cl$^7$ G01C21/00

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2003-23357 A (Matsushita Electric Industrial Co., Ltd.),<br>24 January, 2003 (24.01.03),<br>Full text<br>& WO 2002/091587 A & US 2003/0093221 A1 | 1,3-7,9,10,<br>13,15<br>2,8,11,12,14 |
| Y | JP 2002-286473 A (Kabushiki Kaisha Auto Network Gijutsu Kenkyusho),<br>03 October, 2002 (03.10.02),<br>Full text<br>(Family: none) | 2,8,11,12,14 |
| Y | JP 2001-141490 A (Equos Research Co., Ltd.),<br>25 May, 2001 (25.05.01),<br>Full text<br>(Family: none) | 2,8,11,12,14 |

[X] Further documents are listed in the continuation of Box C. [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>03 August, 2004 (03.08.04) | Date of mailing of the international search report<br>17 August, 2004 (17.08.04) |
| Name and mailing address of the ISA/<br>Japanese Patent Office<br>Facsimile No. | Authorized officer<br><br>Telephone No. |

Form PCT/ISA/210 (second sheet) (January 2004)

**INTERNATIONAL SEARCH REPORT**

International application No.
PCT/JP2004/006210

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-328033 A (Matsushita Electric Industrial Co., Ltd.), 15 November, 2002 (15.11.02), Full text (Family: none) | 1-15 |
| A | JP 10-38591 A (Nippon Telegraph And Telephone Corp.), 13 February, 1998 (13.02.98), Full text (Family: none) | 1-15 |

Form PCT/ISA/210 (continuation of second sheet) (January 2004)